# EUROPEAN PATENT SPECIFICATION

(11) **EP 0 675 839 B1**
(45) Date of publication and mention of the grant of the patent: **23.07.1997**
(21) Application number: 94903841.8
(22) Date of filing: 17.12.1993
(51) Int. Cl.: B65D 81/32

(54) **REFILLABLE MULTI-CAVITY DISPENSER AND REFILL CARTRIDGE THEREFOR**
NACHFÜLLBARER MEHRKAMMER-SPENDER UND NACHFÜLLPATRONE
DISTRIBUTEUR RECHARGEABLE A CAVITES MULTIPLES ET SA CARTOUCHE DE RECHARGE

(30) Priority: 22.12.1992 US 995049; 17.05.1993 US 62993
(43) Date of publication of application: 11.10.1995
(73) Proprietor: UNILEVER PLC, London EC4P 4BQ (GB); UNILEVER N.V., 3013 AL Rotterdam (NL)
(72) Inventor: GENTILE, James, Louis, Orange, CT 06477 (US); CANCRO, Lewis, P., Trumbull, CT 06611 (US); WILLIAMS, David, Robert, Monroe, CT 06468 (US)
(74) Representative: Rots, Maria Johanna Francisca
(86) International application number: EP9303623
(87) International publication number: WO9414680

(56) References cited:
- EP-A- 0 503 824
- DE-A- 2 537 022
- DE-U- 9 100 054
- US-A- 5 038 963

## Description

The present invention reiates to rigid telescopically arranged multi-cavity dispensing containers for flowable material, such as tooth paste and the like from which it is desired to dispense simultaneously two or more reactive substances which require separate storage until time of use. More particularly it relates to a disposable refill cartridge, for use in a dispensing container of the above type, which can be used in conjunction with a reusable dispensing head and a reusable base.

There exists a desire to provide sodium bicarbonate and peroxide gel as components of toothpaste. Sodium bicarbonate is a well known and commonly used abrasive and cleaner. Peroxide gel is regarded as a beneficial ingredient to help promote healthy gums. These components are reactive when mixed, and therefore must be maintained separately until time of use.

US Patent Nos. 5,020,694 to Pettengill and US Patent No. 5,038,963 to Pettengill and Gentile disclose rigid piston type multi-cavity dispensing containers for the simultaneous coextrusion in predetermined proportions of two or more materials which may have different rheologies. The lower body member of the containers has a base and two or more piston rods with pistons attached thereto. The upper body member has parallel cylinders for containing the flowable materials and outlet means for dispensing the materials. The lower end of the cylinders receive the pistons whereby the relative compression of upper and lower body members forces the flowable materials out through the outlet means. This produces a single, banded unmixed stream of material that can be neatly and easily applied onto the narrow width of a toothbrush. If, after all of the flowable materials are expended, the upper and lower members are pulled apart, the piston heads remain attached to the piston rods of the lower member. Thus any upper body refill unit would not come equipped with pistons to seal the flowable materials within the upper body parallel cylinders. Such a refill unit would be messy and impractical. Accordingly, both upper and lower body members of these designs are discarded after the contents of dispenser are used up. This produces unnecessary waste and is not the most economical of arrangements.

In short, US Patent No. 5038963 discloses a dispenser as in the preamble of claim 1, having a dispensing head, an outlet means and a base unit which accommodates the dispensing head and which has piston rods. However, the dispenser is not reusable.

EP-A-503 824 discloses a refill cartridge according to the preamble of claim 11.

US Patent US-A-5,289,949 to Gentile discloses a multi-cavity dispensing refill cartridge to be used with a reusable base. The refill cartridge has two hollow, separate parallel cylinders for containing flowable material. One end of each of the cylinders is in fluid communication with outlet means, while the other end telescopically and slidingly accommodate piston heads. A reusable base with piston rods is used to compress piston heads in the refill cartridge thereby dispensing the flowable material. Once the flowable material is expended, the refill cartridge can be discarded and a new one can be used with the reusable base. While this design is more environmentally friendly than past designs, there is still room for improvement. In particular, because the refill cartridge of this patent contains the means for dispensing the flowable materials (i.e. outlet assembly, nozzle, cap and a rigid dispensing head to be pressed upon in the dispensing of the flowable material) more material than is absolutely necessary is discarded each time the refill cartridge is replaced.

Thus it is an object of this invention, for ecological and economical reasons, to provide a multi-cavity dispensing refill cartridge which can be used in conjunction with a reusable base and a reusable dispensing head, for the simultaneous coextrusion, in predetermined portions, of two or more flowable materials, which may have different rheologies, upon the relative compression of the reusable dispensing head and the reusable base, to produce a single, banded unmixed stream of material that can neatly and easily be applied onto the narrow width of a toothbrush. It is a further object to provide such a refill cartridge which, in conjunction with the reusable base and reusable dispensing head, dispenses a single stream of unmixed material and which provides segregation of the component materials within the dispenser both prior to and after dispensing.

Thus in accordance with the present invention there is provided a disposable refill cartridge, preferably a disposable multi-cavity refill cartridge, for use with a reusable base and a reusable dispensing head for the simultaneous coextrusion of at least two flowable materials.

In its broadest embodiment the invention comprises;
a refillable multi-cavity dispenser for the co-extrusion of at least two flowable materials, comprising:
a reusable dispensing head comprising at least two hollow and separate parallel outer dispensing cylinders, the outer dispensing cylinders having a first generally closed end and outlet channels at the closed end;
an outlet means in fluid communication with the outlet channels, the outlet means including adjacent outlet openings unconnected to each other and having means for causing the flowable material to flow toward each other at the outlet openings to form a single banded, unmixed stream of the materials outside of the outlet means; and
a reusable base unit which slidingly and telescopically accommodates the dispensing head, the base unit having piston rods, characterised in that the dispenser further comprises at least one disposable refill cartridge which is adapted to be loaded into the dispensing head, each cartridge comprising at least one hollow and separate parallel inner refill cylinder, each inner cylinder being telescopically and sealingly accommodated within one of the outer dispensing cylinders, each inner refill cylinder for containing one of the flowable materials, each of the inner refill cylinders having a generally open top end in fluid communication with the outlet channels, and a bottom end telescopically and slidingly accommodating a piston head which conforms to ride sealingly along the interior walls of the inner refill cylinder so as to force the flowable materials to flow toward the top end of the inner refill cylinders upon relative compression of the inner refill cylinders and piston heads, the piston heads being compressibly engagable with the piston rods of the reusable base unit.

The invention also provides a refill cartridge for use with a refillable multi-cavity dispenser for the coextrusion of at least two flowable materials, comprising:
two hollow and separate parallel inner refill cylinders for being telescopically and sealingly accommodated within parallel outer dispensing cylinders of a reusable dispensing head, each inner refill cylinder containing one of the flowable materials, the inner refill cylinders each having an open top end and a bottom end telescopically and slidingly accommodating a piston head which conforms to ride sealingly along the interior walls of the inner refill cylinders so as to force the flowable materials to flow toward the top end of the inner refill cylinders upon relative compression of the inner refill cylinders and piston heads, the piston heads being compressibly engagable with piston rods of a reusable base unit; and
means for temporarily sealing the first end of the inner refill cylinders; characterised in that it further comprises
orientating means for allowing each inner refill cylinder to be telescopically accommodated by one of the outer dispensing cylinders of a dispensing head and not by the other; and
pull tab means extending below the bottom ends of the inner refill cylinders and coupled to the inner refill cylinders for providing a surface to grasp when the refill cartridge is being removed from the dispensing head.

The reusable dispensing head has at least two hollow and separate parallel outer cylinders having a first generally closed end and outlet channels at the closed end. The disposable refill cartridge comprises at least one hollow inner refill cylinder which is telescopically accommodated within one of the cylinders of the dispensing head. Preferably the disposable refill cartridge has two hollow and separate parallel inner refill cylinders which are each telescopically accommodated within one of the outer cylinders of the dispensing head.

Each of the inner refill cylinders contains one of the flowable materials. The inner refill cylinders have a first generally open top end which can be temporarily sealed until the refill cartridge is combined with the reusable dispensing head. Once loaded in the reusable dispensing head, the open end of each inner refill cylinder is in fluid communication with the outlet channels of the dispensing head. The second or bottom end of the inner refill cylinders, telescopically and slidingly accommodate parallel piston heads which are compressibly engagable with piston rods of the reusable base. The piston heads conform to ride sealingly along the interior walls of the inner refill cylinders so as to force the flowable materials to flow toward the open top end upon relative compression of the inner refill cylinders and piston heads. The flowable material flows out of the inner cylinders and through the outlet means of the dispensing head.

Once a disposable refill cartridge has been emptied, it can be discarded, and the dispensing head and reusable base, which comprise the bulk of the material of the entire unit, can be reused in conjunction with a new refill cartridge.

For a better understanding of the present invention together with other and further objects by way of example only, reference is made to the following description, taken in conjunction with the accompanying drawings, in which:

Figure 1 is an exploded view of a refillable multi-cavity dispenser composed of a reusable dispensing head, a refill cartridge and a reusable base.

Figure 2 is a sectional view of the figure 1 dispensing head taken through the outlet channels.

Figure 3 shows a perspective view of a refill cartridge.

Figure 4 is the figure 3 refill cartridge as viewed from below.

Figure 5 is a frontal cutaway view of a refill cartridge loaded in a dispensing head.

Figure 6 is a bottom view of the figure 5 dispensing head and refill cartridge.

Figure 7 is a single refill cylinder.

Figure 8 is a frontal cutaway view of two single refill cylinders loaded in a dispensing head.

Figure 8a is a bottom view of the figure 8 dispensing head loaded with two single refill cylinders.

Figure 9 is a side view of a reusable dispensing head mounted on a reusable base.

Figure 10 is a frontal cutaway view of a refill cartridge loaded in a dispensing head which in turn is mounted on a reusable base.

Figures 11a and 11b are respectively a sectional side view and a bottom view of a piston head.

Figure 12 is a perspective view of an outlet assembly.

Figure 13 is a sectional view of an outlet assembly.

Figure 14 is a frontal view of a nozzle with an opened, hinged cap.

Figure 15 is a sectional view from the side of the figure 14 nozzle.

Figure 16 is a sectional view from the side of a reusable base.

Figure 17 is a perspective view of a dispensing head with a window.

Figure 18 is an alternate two piece outlet assembly.

Figure 19 is a cross-sectional view of the figure 18 outlet assembly.

Figure 20 is an enlarged interior end view of the nozzle member of the outlet of figure 18.

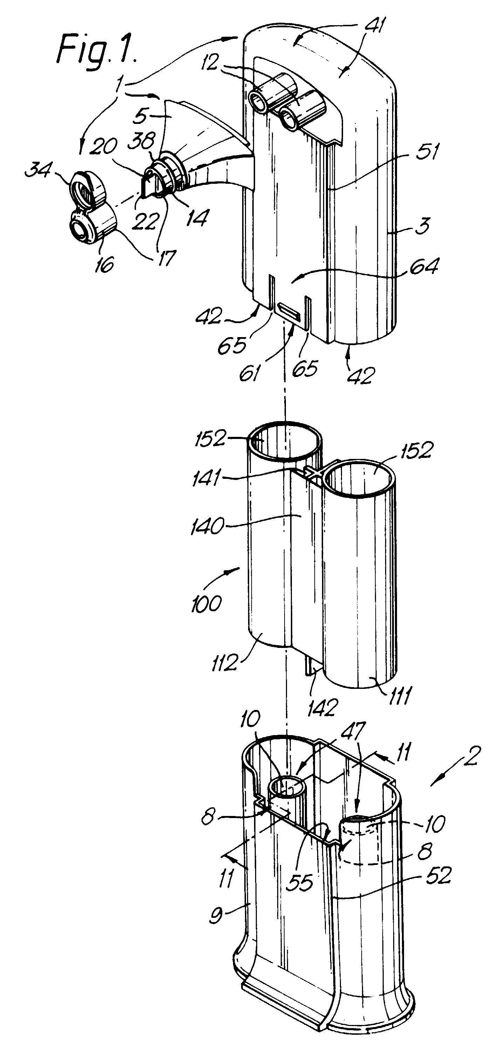

An exploded view of a refillable multi-cavity dispenser composed of a reusable dispensing head 1, a reusable base, 2, and a refill cartridge 100, is shown in figure 1. Each cylinder of the refill cartridge 100 contains one of two flowable materials. In use, the refill cartridge 100 is loaded within the dispensing head 1 and together they are mounted on reusable base 2. The relative compression of the dispensing head 1 and the base 2 causes flowable material to be forced out of the refill cartridge to the outlet channels 12 and through outlet means 17. Each flowable material follows a separate path and is maintained segregated from the other until it is finally dispensed by nozzle 16. One the flowable materials in the refill cartridge have been used up, the dispensing head and base can be pulled apart. The refill cartridge can then be removed from the dispensing head and replaced with a fresh cartridge.

The dispensing head 1 has a upper shroud 3 which incorporates two hollow, separate, and parallel outer cylinders. The top end 41 of each outer dispensing cylinder is generally closed except for the outlet channels 12, while the bottom end 42 of each outer dispensing cylinder slidingly and telescopically receives one of the inner cylinders 111 and 112 of the refill cartridge 100.

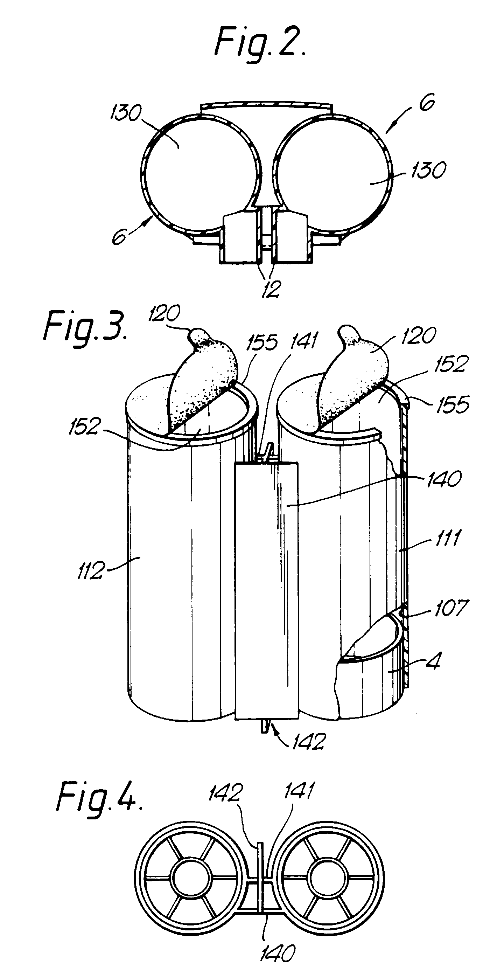

Inner refill cylinders 111 and 112 each contain one of two reactive flowable materials. When the refill cartridge 100 is loaded in the dispensing head 1, the top ends 152 of the inner refill cylinders are open providing fluid communication between the flowable material contained therein, the upper portions 130 of the outer cylinders and the outlet channels 12. As shown in figure 2, a sectional view taken through the centre of the outlet channels 12, outlet channels 12 provide fluid communication between the outer cylinder upper portions 130 and outlet means 17. Outlet means 17 comprises outlet assembly 5 and nozzle 16. Nozzle 16 is sealed by hinged cap 34.

Referring to figure 3, which is a frontal cutaway view of refill cartridge 100, it can be seen that the bottom end of each inner refill cylinder telescopically and slidingly accommodates a piston head 4 which conforms to ride sealingly within the inner walls 107. The top end 152 of the inner refill cylinders 111 and 112 can be temporarily sealed by removable peel off seals 120. Thus the flowable materials can be completely sealed within the refill cartridge 100 allowing it to be handled and sold as a unit separate and independent from the dispensing head 1 and reusable base 2.

A flange 155 extends along the top edge of the inner cylinders. Flange 155 extends along the top edge of the inner cylinders. Flange 155 provides a surface which peel off seals 120 can adhere to. Furthermore, flanges 155 provides a seal between the inner and outer cylinders. This seal prevents flowable material from flowing into the area between the outer wall of the inner cylinder and the inner wall of outer cylinder. The flowable material is therefore constrained in such a way that it must flow out of the first end of the inner cylinder and into the upper portion 130 of the outer cylinders. From there the flowable materials each flow along their separate segregated paths through the outlet channels 12 and the outlet means 17. The flange 155 also provides for a friction fit which keeps the inner cylinders from falling out of the outer cylinders.

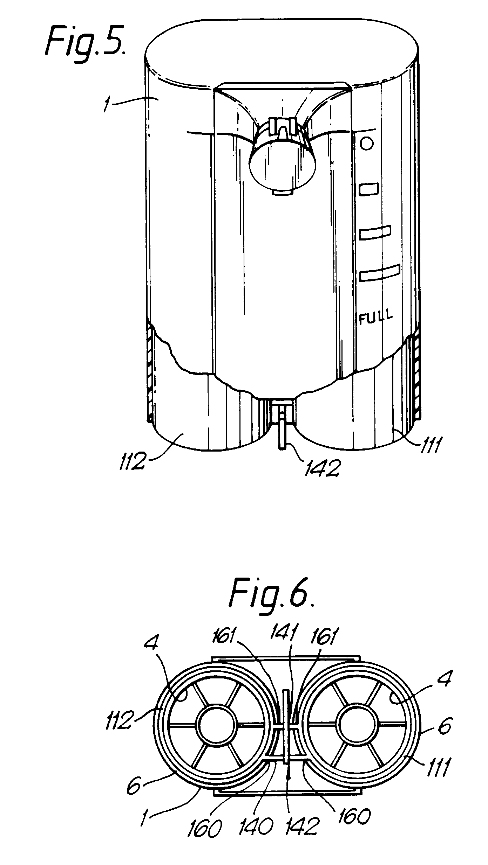

Cylinders 111 and 112 in the refill cartridge are connected to each other by connecting bars 140 and 141 which are shown clearly in figure 4. Pull tab 142 is coupled to the connecting bars. Referring to figures 3 and 5 it can be seen that pull tab 142 extends below the bottom ends of inner refill cylinders 111 and 112 to provide a surface which can be grasped so that the refill cartridge can be pulled out of the dispensing head once all of the flowable material has been expended.

Connecting bars 140 and 141 also serve to properly orientate the refill cartridge 100 within dispensing head 1. Proper orientation of the refill cartridge insures that the flowable materials flow through the same separate path each time a new refill cartridge is loaded into the dispensing head. This is important because the two flowable materials are reactive. Thus, if a refill cartridge were improperly loaded, the new flowable material would react with residual flowable material in the outlet means 17, outlet channels 12 and the upper portions 130 of the outer dispensing cylinders.

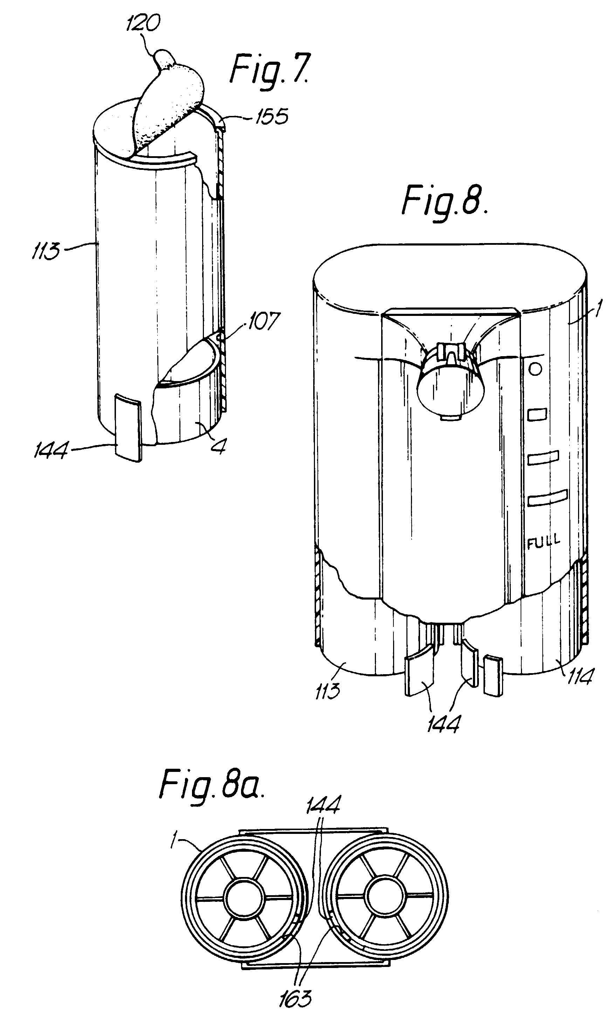

Figure 6 shows a bottom view of a refill cartridge loaded in a dispensing head. The connecting bars 140 and 141 extend through corresponding slots 160 and 161 in the outer dispensing cylinders 6 of dispensing head 1. Both the connecting bars and slots are parallel to but offset from the imaginary plane which connects the axes of the cylinders. Accordingly, the refill cartridge can only be mounted in the one orientation in which the slots align with the connecting bars. Other means of properly orientating the refill cartridge are easily conceivable. For example, if the two sets of outer and inner refill cylinders were of different sizes, this difference would serve to properly orient the refill cartridge.

An alternative embodiment of the present invention is shown in figures 7 & 8 and 8a. The principal difference of this alternative embodiment is that it comprises two refill cartridges which each comprise a separate cylinder 113 & 114, which are not attached to each other. Each refill cartridge cylinder 113, 114 contains one of two flowable materials. Like the cylinders of the prior embodiment, cylinders 113 & 114 can both be sealed at their top ends by removable peel off seals 120 which seal against flange 155. Their bottom ends telescopically and slidingly accommodate piston heads 4.

In use, the refill cartridges 113, 114 are loaded in the within the dispensing head 1, and together they are mounted on a reusable base. The relative compression of the dispensing head and base causes flowable material to be forced out of the refill cartridges to the outlet channels, and through the outlet means. Once the flowable materials in the refill cartridges have been used up, the dispensing head and base can be pulled apart. The refill cartridges can then be removed from the dispensing head, and replaced with fresh cartridges.

As with the embodiment shown in figure 1, the dispensing head 1 shown in figure 8 has an upper shroud which incorporates two hollow, separate and parallel outer cylinders. The top end of eacn outer dispensing cylinder is generally closed except for the outlet channels while the bottom end of each outer dispensing cylinder slidingly and telescopically receives one of the refill cartridges 113, 114.

When the refill cartridges 113, 114 are loaded in the dispensing head 1, the top ends of the inner refill cylinders are open providing fluid communication between the flowable material contained therein, the upper portions of the outer cylinders and the outlet channels.

In this embodiment pull tabs 144 serve both to remove the cylinders when they are empty and to insure that each refill cylinder is only inserted in the proper outer dispensing cylinder of the dispensing head 1. As shown in figure 8a, there are slots 163 in each outer dispensing cylinder which correspond to the tabs of the refill cylinders so as to insure that the proper inner refill cylinder can only be inserted in the proper outer cylinder of the dispensing head 1. Pull tabs 144 which act as a cylinder orientation means however represent a preferred but not essential aspect of this embodiment of the invention.

As with the refill cartridges described in conjunction with figure 1, each separate inner refill cylinder telescopically and slidingly accommodates a piston head which conforms to ride sealingly within the inner walls. Referring specifically to figure 7, the top end of the refill cartridge can be temporarily sealed by a removable peel off seal 120, thereby allowing the completely sealed refill cartridges to be handled and sold separately and independently from the dispensing head and reusable base.

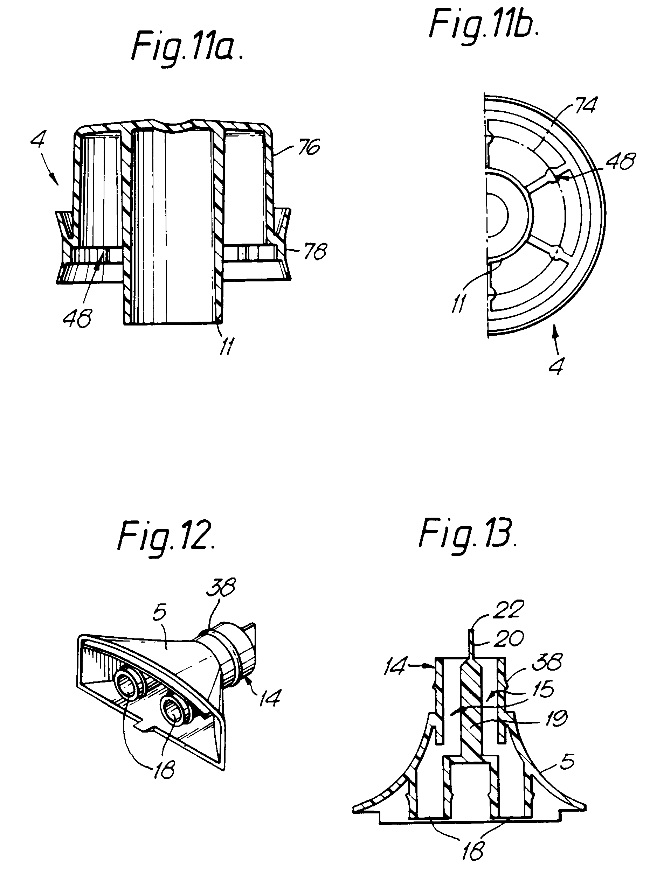

The remaining discussion pertains to any of the aforementioned embodiments of the invention. Referring back to figure 1 specifically, though the same principles and features may be found in the embodiment of figures 7 and 8, it can be seen that the reusable base 2 has a pair of parallel piston rods 8, with openings 10. Openings 10 are designed to surround the control portion 11, shown in figures 11a and 11b, of the piston heads 4. The openings 10 are dimensioned such that central portion 11 can easily slide into and out of them. This makes the piston heads 4 compressibly engagable with piston rods 8.

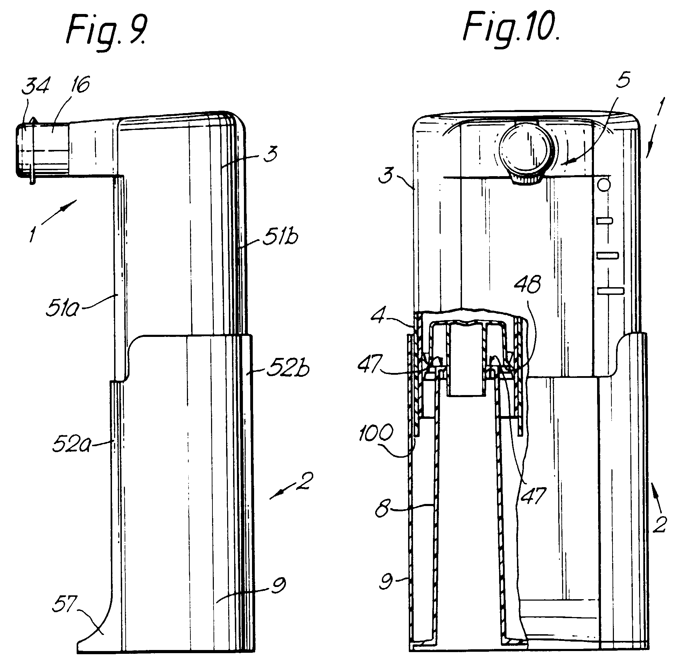

In other words, when the dispensing head 1, with the refill cartridge 100 loaded therein, and the reusable base 2 are compressed together, edge 47 of the piston rods 8 abuts and presses upon the bottom portion 48 of piston heads 4 as shown in figure 10. Referring to figures 11a and 11b, which are respectively a sectional view from the side and bottom view of a piston head 4, it can be seen that bottom portion 48 of the piston head 4 is the bottom edges of ribs 74 which extend between the cap portion 76 of piston head 4 and central portion 11. In addition to providing a surface for edges 47 of the piston rods 8 to press against, ribs 74 also contribute to the structure stiffness of the piston heads 4.

When the dispensing head 1 and refill cartridge 100 are pulled apart from the reusable base 2, central portions 11 of the piston heads 4 slide easily out of openings 10. Thus the piston heads 4 only engage the piston rods 8 when refill cartridge 1 and reusable base 2 are compressed. Other compressibly engagable arrangements are also possible. For example, the piston heads 4 could be provided with a flat bottom which could engage a flat top of the piston rods 8. The provision of lower portions 11 and openings 10, however, help to keep the piston heads properly orientated within cylinders 111 and 112.

As shown in figure 1, but with the principle being equally applicable to the embodiment of figures 7 and 8, reusable base 2 is dimensioned to telescopically receive dispensing head 1 which refill cartridge 100 loaded therein. Specifically, upper shroud 3 is arranged to closely conform in sliding relation with lower shroud 9. The upper and lower shrouds 3 and 9 include means for guiding linear motion between the dispensing head 1 and reusable base 2, shown as conforming longitudinal projecting ridges 51 and 52. These ridges are longitudinal, outward, rectangular extensions of the shrouds 3 and 9 having parallel side walls and flat facing surfaces. The projecting ridge 52 of the lower shroud 9, which forms an inner groove 55, is dimensioned to receive longitudinal ridge 51 of the upper shroud 3. When the two shrouds are assembled and compressed the longitudinal ridges 51 and 52 serve to guide the relative motion of the dispensing head and the reusable base, preventing their relative rocking and providing smooth, equal, linear motion of the piston heads even when the flowable materials have different rheologies.

The shrouds 3 and 9 may be provided with longitudinal projecting ridges on both their front and back sides. These are shown as 51a, 51b, 52a, 52b in figure 9. In addition, front ridges 51a and 52a may have different widths than back ridges 51b and 52b. These then serve to orientate the reusable base with respect to the dispensing head. This is especially useful when the dispensing head is to be used with a reusable base which has an extension such as extension 57 designed to prevent the forward tipping of the multi-cavity dispenser when downward pressure is applied to the dispensing head 1.

It is understood that the means for guiding linear motion between the refill cartridge and the reusable base may be of any acceptable shape and comprise a plurality of extensions, both inward and outward. In addition to providing guided relative motion of the shrouds, the extensions improve the mechanical rigidity of the shrouds.

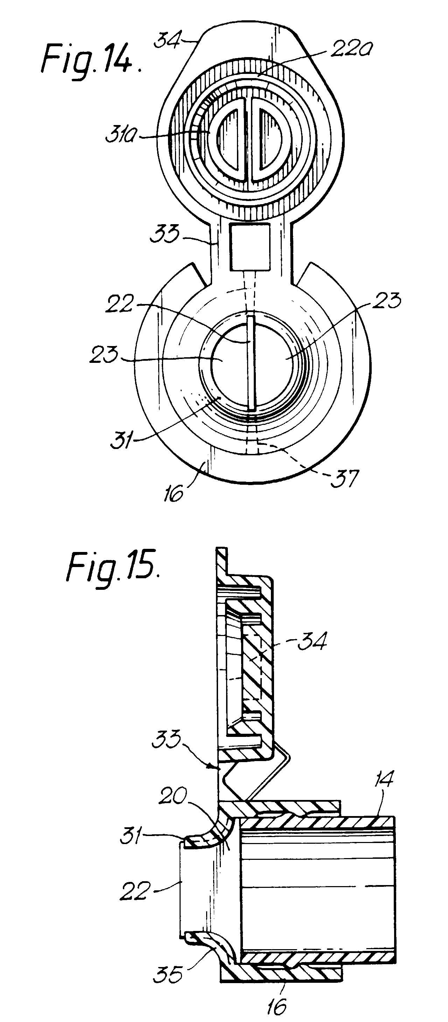

Referring to figure 10, when dispensing head 1 and the reusable base 2 are compressed, piston rods 8 simultaneously and equally push upwards the piston heads 4, in inner cylinders 111 and 112, thereby forcing the flowable reactive materials upwards and into the outlet channels 12 and through outlet assembly 5. Flowable materials from each of the outlet channels 12 are received by outlet assembly 5, shown in figures 12 and 13, which provides for a forward facing dispensing nozzle. Outlet assembly 5 is fitted about outlet channels 12 and converges so as to end in an outlet passage 14. Outlet passage 14 has two passageways 15, each of which connects through one of the outlet channels 12 to one of the upper portions 130 of the two cylinders 6. The outlet passage 14 of outlet assembly 5 is arranged to receive a separate nozzle 16. Outlet assembly 5 and nozzle 16 together comprise the outlet means 17 as shown in figure 1.

The outlet channels 12 receive sleeves 18 of the outlet assembly 5 shown in figures 12 and 13. As the tube sleeves 18 converge, they form a common rigid barrier 19. The outlet passage 14 is bisected by a flat rigid septum 20 extending from the barrier 19 and sitting fixedly within the inner walls of the outlet passage 14. The septum 20 is tapered cross-sectionally and ends in a straight edge 22. The cross-section of the septum edge 22 forms a sharp angle adjacent the straight edge of only a few degrees in size. The sides of the septum are preferably textured, for example by vapour honing, to a dull finish to promote adherence of the products thereto, which together with the taper causes the product streams to converge into a single stream as they emerge from adjacent outlet openings 23 shown in figure 14.

The septum 20 acts to keep the two reactive materials separate as they emerge from the cylinders 6, and also prevents reaction and obstruction of the outlet means 17 by reaction products. The flowable materials converge as they flow through the outlet means 17 but the two streams do not meet until they have fully left the outlet means opening 23. The taper design of the septum 20 causes the two streams to gradually converge until they meet at the septum edge 22, beyond the end of the outlet means opening 23. At this point they smoothly touch and continue to flow onto the intended surface, e.g. toothbrush, as a single, substantially cylindrical, banded stream. This stream is convenient and easy to direct with accuracy upon a limited surface area.

The diameter of the emerging stream may be regulated according to the packaging specifications. For example, nozzle 16, shown in figures 1, 14 and 15, which snaps on around the outlet passage 14 by engaging ridge 38 may have an interior taper which reduces the effective outlet passage diameter as shown in figure 15. In such an embodiment, the length of the septum edge 22 is reduced and the side edges of the septum conform to the converging inner shape 35 of the nozzle 16.

With reference to figure 14, nozzle 16 is provided with longitudinal grooves 37 along its converging inner wall for retaining the inward sloping sides of the septum 20 residing therein. Such an arrangement maintains the septum 20 within a rigid position within the outlet means 17 and prevents intermixing of the streams at contact points of the assembled septum 20 and outlet 17. The septum 20 extends to a location preferably 0.13 mm to 0.25 mm (0.005 to 0.010 inches) beyond the outlet means opening 23.

The nozzle 16 preferably has a cap 34 connected thereto by a hinge 33. Cap 34 includes a complimentary engaging means comprising recesses 31a and 22a for receiving respectively nozzle rim 31 and septum edge 22 during closure, so that intermixing of the two substances is prevented once the cap is closed.

The outlet means 17 is provided with one or more means for causing the outlet streams to flow toward each other and avoid the otherwise uncontrolled outlet flow which can result in the streams of the two or more materials flowing away from each other as they emerge from the outlet opening. The means may include a tapered septum 20 which divides the outlet, tapered peripheral walls on the outlet means as exemplified by nozzle 16, or a differential surface resistance on the interior walls of the outlet means, such that greater surface resistance is provided on the interior surfaces which are adjacent to other outlet openings than on the peripheral interior surfaces of the outlet means. Thus the surfaces of the septum 20 may be provided with a dull finish, such as by vapour honing, while the interior peripheral surfaces of nozzle 16 remain smooth.

As the materials flow over the surfaces there will be greater resistance to the flow over the septum causing the flow of materials to "curl" in the direction of the septum as they emerge from the outlet, whereby the two or more streams of material curl towards each other and converge into a single stream. Alternatively, the interior peripheral surfaces of the outlet means can be treated, e.g. with a lubricant, such as polytetrafluoroethylene or silicone materials to reduce the surface friction of the interior peripheral surfaces as compared to the surface friction of the septum 20.

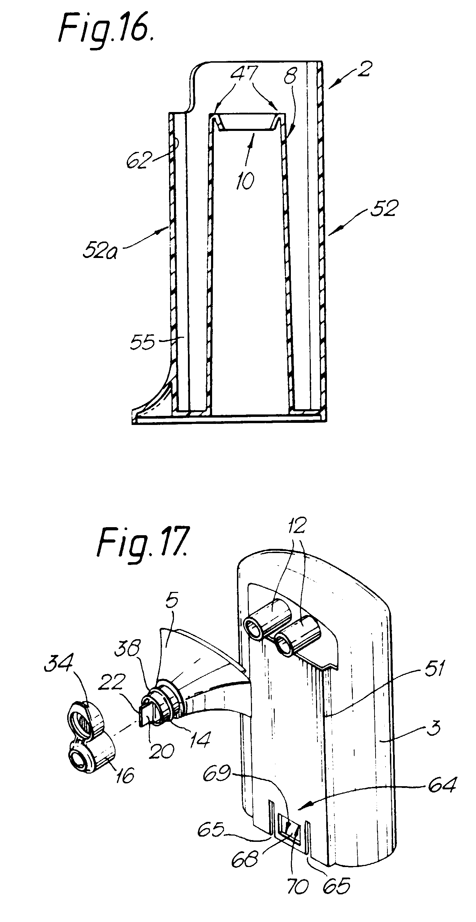

Referring once again to figure 1, it can be seen that means for selectively engaging reusable base 2, shown as horizontally extending catching ridge 61 protrudes outward from the longitudinal extending ridge 51 on the front side of dispensing head 1. This ridge is used to keep the dispensing head 1 from disengaging from the reusable base 2 when the dispenser is lifted by dispensing head 1. As shown in figure 16, a corresponding catching rib 62 projects inward from the Inside groove 55 of longitudinal extending ridge 52a of reusable base 2. The two catching ridges engage when the base and dispensing head are pulled apart so as to prevent their separation.

Referring back to figure 1, it can be seen that two vertically orientated slots 65 are formed on either side of catching ridge 61. This makes the area around catching ridge 61 relatively flexible such that when the area 64 above it is pressed upon by a thumb or finger, catching ridge 61 moves inward sufficiently so that it will not engage with catching ridge 62 when dispensing head 1 is pulled apart form reusable base 2. This allows the dispensing head to be removed from the reusable base when the refill cartridge has been emptied so that it may be replaced with a full cartridge.

As an alternative to the vertical slots 65, the area around the catching ridge 61 may be made sufficiently flexible by making it thinner than the rest of the upper shroud 3.

As an alternative to the catching ridge 61, upper shroud 3 may be provided with a window 68 as shown in figure 17. In this embodiment the lower edge 69 of the windows serves as a means for selectively engaging the reusable base 2 via catching ridge 62. Once again vertical slots 65 on either side of the window 68 make the area relatively flexible such that when area 64 is pressed upon by a thumb or finger, the lower edge 69 moves inward sufficiently so that it will not engage the catching ridge 62 when refill cartridge 1 is pulled apart from reusable base 2. The upper edge 70 of the window is bevelled so that it does not prevent the relative compression of the dispensing head 1 and the reusable base 2.

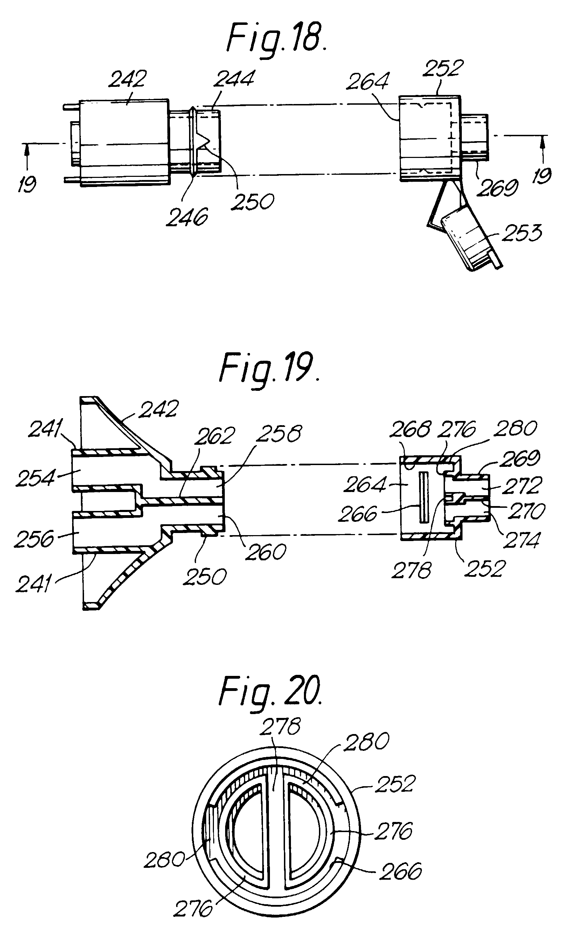

A preferred embodiment of outlet assembly 5 is shown in figures 18, 19 and 20. Outlet assembly 5, as shown in figures 12 and 13, includes a projecting thin septum 20, which may pose difficulties in fabrication. In the alternative embodiment of figures 18 to 20 the outlet assembly 5 is fabricated of connecting part 242 and nozzle member 252, and the use of a thin projecting septum is eliminated.

Connecting part 242 includes a housing arrangement similar to that of part 5 which engages projecting outlets 12 of the refill cartridge and includes sleeves 241 which have internal passages 254 and 256. A cylindrical extension 244 of connecting part 242 includes an interior septum 262 extending to the forward end thereof and separating internal outlet passages 258 and 260 which are respectively connected to inlet passages 254 and 256.

A separate nozzle member 252 is arranged to snap fit over cylindrical extension 244 of connecting part 242. To facilitate the snap fit in an appropriate rotational orientation, cylindrical extension 244 is provided with an engaging rib 246 and triangular shaped locating protrusions 250. Nozzle member 252 has a recess portion 264 with an interior rib 266, shown in figure 19, which is engaged by rib 246. As shown in figure 19 interior rib 266 only extends partially around the peripheral nozzle member 252 whereby gaps are formed to receive triangular locating ridge 250 to ensure appropriate angular orientation of nozzle member 252 when it is fitted over extension 244.

Nozzle member 252 includes a nozzle portion 269, which is circular in cross-section and includes septum 270 which bifurcates nozzle 269 into channels 272 and 274. Septum 270 is preferably tapered and textured as described above and extends to the outlet opening of nozzle member 252. The interior ends of channels 272 and 274 within recess 264 include projecting ribs 276 which form grooves 280 and 278 for receiving respectively the edges of the peripheral walls of extension 244 and septum 262. Tapered ridges 268 on the interior wall of recess 264 are arranged to press the peripheral edges of extension 244 of member 242 into close fit with ridges 276. In an exemplary embodiment four such tapered ridges are provided at equal spacing around recess 264.

Nozzle member 252 is provided with a snap fit cap pivotally mounted thereto having a configuration similar to cap 34.

When assembled, the peripheral edges of channels 258 and 260 are guided into the proper orientation of grooves 280 and 278 by triangular ridges 250 acting in conjunction with interior ridges 266. When fully inserted ridge 266 snaps behind ridge 240 and the forward edges of extension 244 are pressed close to projections 276 by ribs 268, forming a close fit between outlet passages 258 and 260 of connecting part 242 and passages 272 and 274 of nozzle member 252.

## Claims

1. A refillable multi-cavity dispenser for the co-extrusion of at least two flowable materials, comprising:
a reusable dispensing head (1) comprising at least two hollow and separate parallel outer dispensing cylinders, the outer dispensing cylinders having a first generally closed end (41) and outlet channels (12) at the closed end;
an outlet means (17) in fluid communication with the outlet channels (12), the outlet means (17) including adjacent outlet openings unconnected to each other and having means for causing the flowable material to flow toward each other at the outlet openings to form a single banded, unmixed stream of the materials outside of the outlet means; and
a reusable base unit (2) which slidingly and telescopically accommodates the dispensing head (1), the base unit (2) having piston rods (8), characterised in that the dispenser further comprises at least one disposable refill cartridge (100) which is adapted to be loaded into the dispensing head, each cartridge (100) comprising at least one hollow and separate parallel inner refill cylinder (111, 112,113,114), each inner cylinder being telescopically and sealingly accommodated within one of the outer dispensing cylinders, each inner refill cylinder for containing one of the flowable materials, each of the inner refill cylinders (111, 112,113,114) having a generally open top end in fluid communication with the outlet channels (12), and a bottom end (42) telescopically and slidingly accommodating a piston head (4) which conforms to ride sealingly along the interior walls of the inner refill cylinder (111,112,113,114) so as to force the flowable materials to flow toward the top end of the inner refill cylinders upon relative compression of the inner refill cylinders (111,112,113,114) and piston heads (4), the piston heads (4) being compressibly engagable with the piston rods (8) of the reusable base unit.

2. A refillable multi-cavity dispenser according to claim 1 wherein the at least one disposable refill cartridge comprises two disposable refill cartridges, with each cartridge comprising one hollow inner refill cylinder (111,112,113,114).

3. A refillable multi-cavity dispenser according to claim 1, wherein the at least one disposable refill cartridge comprises one disposable refill cartridge, the disposable refill cartridge comprising two hollow inner refill cylinders (111,112).

4. A refillable multi-cavity dispenser according to any of the preceding claims further comprising orientating means (140,141) for allowing each inner refill cylinder (111,112) to be telescopically accommodated by one of the outer cylinders and not by the other.

5. A refillable multi-cavity dispenser according to claim 4 wherein the orientating means (160,161,163) comprise slots (160,161,163) defined in the inner walls of the outer dispensing cylinders and corresponding tabs (140,141,144) which protrude from the outer walls of the inner refill cylinders (111,112,113,114), the tabs (140,141,144) and slots (160,161) being arranged such that each inner refill cylinder (111,112,113,114) can be telescopically accommodated only by one of the outer dispensing cylinders and not by the other.

6. A refillable multi-cavity dispenser according to any of the claims 3-5 wherein the inner refill cylinders (111, 112) are attached to one another.

7. A refillable multi-cavity dispenser according to claim 6 further comprising orientating means (160,161) for allowing each refill cylinder (111,112) to be telescopically accommodated by only one of the outer cylinders and not by the other.

8. A refillable multi-cavity dispenser according to any of claims 3-7 wherein the orientating means (160,161) comprises an orientating member (160,161) extending between the inner refill cylinders (111,112), the orientating member (160,161) being parallel to but offset from the imaginary plane extending between the axes of the inner refill cylinders (111,112) and wherein the outer cylinders define slots (160,161) which align with and receive the offset member (140,141) when each of the inner refill cylinders (111,112) are inserted in the appropriate outer cylinder.

9. A refillable multi-cavity dispenser according to any of claims 3-8 further comprising a pull tab means (142) extending below the bottom ends of the inner refill cylinders (111,112) and coupled to the inner refill cylinders (111,112) for providing a surface to grasp when the refill cartridge (100) is being removed from the dispensing head (1).

10. A refillable multi-cavity dispenser according to any of the preceding claims further comprising flanges (155) on the top end of the inner refill cylinders.

11. A refill cartridge (100) for use with a refillable multi-cavity dispenser for the coextrusion of at least two flowable materials, comprising:
two hollow and separate parallel inner refill cylinders (111,112) for being telescopically and sealingly accommodated within parallel outer dispensing cylinders of a reusable dispensing head (1), each inner refill cylinder (111,112) containing one of the flowable materials, the inner refill cylinders (111,112) each having an open top end and a bottom end (42) telescopically and slidingly accommodating a piston head (4) which conforms to ride sealingly along the interior walls of the inner refill cylinders (111,112) so as to force the flowable materials to flow toward the top end of the inner refill cylinders (111,112) upon relative compression of the inner refill cylinders (111,112) and piston heads (4), the piston heads (4) being compressibly engagable with piston rods (8) of a reusable base unit (2); and
means (120) for temporarily sealing the first end of the inner refill cylinders (111,112); characterised in that it further comprises
orientating means (140,141) for allowing each inner refill cylinder (111,112,113,114) to be telescopically accommodated by one of the outer dispensing cylinders of a dispensing head (1) and not by the other; and
pull tab means (142,144) extending below the bottom ends (42) of the inner refill cylinders (111,112) and coupled to the inner refill cylinders (111,112) for providing a surface (142,144) to grasp when the refill cartridge (111,112,113,114) is being removed from the dispensing head (1).

12. A refill cartridge (100) according to claim 11 wherein the orientating means comprise tabs (140,141,144) which protrude from the outer walls of the inner refill cylinders for co-operating with slots (160,161,163) defined in the inner walls of the outer dispensing cylinders such that each inner refill cylinder (111,112) can be telescopically accommodated only by one of the outer dispensing cylinders and not by the other.

13. A refill cartridge (100) according to claim 11 or claim 12 wherein the inner refill cylinders (111,112) are attached to one another.

14. A refill cartridge (100) according to claim 12 wherein the orientating means (140,141) comprises an orientating member (140,141) extending between the inner refill cylinders (111,112), the orientating member (140,141) being parallel to but offset from the imaginary plane which extends between the axes of the inner refill cylinders (111,112).

15. A refill cartridge according to any of claims 11-14 further comprising a pull tab means (142,144) extending below the second ends of the inner refill cylinders (111,112) and coupled to the inner refill cylinders (111,112) for providing a surface (142,144) to grasp when the refill cartridge (100) is being removed from the dispensing head.

16. A refill cartridge according to any of claims 11-15 further comprising flanges (155) on the top end of the inner refill cylinders.

## Patentansprüche

1. Nachfüllbarer Mehrkammerspender zum gemeinsamen Auspressen wenigstens zweier fließfähiger Stoffe, der aufweist:
einen wiederverwendbaren Spendekopf (1), der wenigstens zwei hohle und separate parallele äußere Spendezylinder aufweist, die ein erstes allgemein geschlossenes Ende (41) und Auslaßkanäle (12) am geschlossenen Ende haben;
mit den Auslaßkanälen (12) in Fluidverbindung stehende Auslaßglieder (17), die nicht miteinander in Verbindung stehende benachbarte Auslaßöffnungen und Mittel enthalten, die bewirken, daß die fließfähigen Stoffe an den Auslaßöffnungen zueinander fließen und außerhalb der Auslaßglieder ein einzelnes unvermischtes Band der Stoffe bilden; und
eine wiederverwendbare Basiseinheit (2), die den Spendekopf (1) teleskopartig gleitend aufnimmt und Kolbenstangen (8) hat,
dadurch gekennzeichnet, daß der Spender außerdem wenigstens eine Wegwerf-Nachfüllkartusche (100) aufweist, die zum Einsetzen in den Spendekopf eingerichtet ist, wobei jede Kartusche (100) wenigstens einen hohlen und separaten parallelen inneren Nachfüllzylinder (111,112,113,114) aufweist, von denen jeder teleskopartig und dichtend in einem der äußeren Spendezylinder sitzt und einen der fließfähigen Stoffe aufnimmt und jeweils ein mit den Auslaßkanälen (12) in Fluidverbindung stehendes generell offenes oberes Ende und ein unteres Ende (42) hat, das teleskopartig gleitend einen Kolbenkopf (4) aufnimmt, der formschlüssig mit den Innenwänden des inneren Nachfüllzylinders (111,112,113,114) übereinstimmt und an diesen Innenwänden dicht entlang gleitet, um beim Drücken der inneren Nachfüllzylinder (111,112,113,114) relativ zu den Kolbenköpfen (4) die fließfähigen Stoffe zum oberen Ende dieser inneren Nachfüllzylinder zu pressen, wobei die Kolbenköpfe (4) unter Druck in die Kolbenstangen (8) der wiederverwendbaren Basiseinheit eingreifen.

2. Nachfüllbarer Mehrkammerspender nach Anspruch 1, bei dem die wenigstens eine Wegwerf-Nachfüllkartusche zwei wegwerfbare Nachfüllkartuschen aufweist, von denen jede Kartusche einen hohlen inneren Nachfüllzylinder (111,112,113,114) aufweist.

3. Nachfüllbarer Mehrkammerspender nach Anspruch 1, bei dem die wenigstens eine Wegwerf-Nachfüllkartusche aus einer Wegwerf-Nachfüllkartusche besteht, die zwei hohle innere Nachfüllzylinder (111,112) hat

4. Nachfüllbarer Mehrkammerspender nach einem der vorangehenden Ansprüche, der weiterhin Ausrichtmittel (140,141) aufweist, die die teleskopartige Aufnahme jedes inneren Nachfüllzylinders (111,112) von einem der äußeren Zylinder und nicht vom anderen Zylinder ermöglichen.

5. Nachfüllbarer Mehrkammerspender nach Anspruch 4, bei dem die Ausrichtmittel (160,161,163) an den Innenwänden der äußeren Spendezylinder liegende Schlitze (160,161,163) und entsprechende Lappen (140,141,144) aufweisen, die von den Außenwänden der inneren Nachfüllzylinder (111,112,113,114) vorstehen, und diese Lappen (140,141,144) und Schlitze (160,161) sind so angeordnet, daß jeder innere Nachfüllzylinder (111,112,113,114) teleskopartig nur von einem der äußeren Spendezylinder und nicht vom anderen aufgenommen werden kann.

6. Nachfüllbarer Mehrkammerspender nach einem der Ansprüche 3-5, bei dem die inneren Nachfüllzylinder (111,112) aneinander befestigt sind.

7. Nachfüllbarer Mehrkammerspender nach Anspruch 6, der außerdem Ausrichtmittel (160,161) aufweist, die die teleskopartige Aufnahme jedes Nachfüllzylinders (111,112) nur von einem und nicht vom anderen äußeren Zylinder gestatten.

8. Nachfüllbarer Mehrkammerspender nach einem der Ansprüche 3-7, bei dem die Ausrichtmittel (160,161) ein zwischen den inneren Nachfüllzylindern (111,112) liegendes Ausrichtglied (160,161) aufweisen, das parallel zu, jedoch beabstandet von einer gedachten Ebene liegt, die von den Achsen der inneren Nachfüllzylinder (111,112) aufgespannt ist, und dabei bilden die äußeren Zylinder Schlitze (160,161), die mit den Abstandsgliedern (140,141) fluchten und diese aufnehmen, wenn jeder der inneren Nachfüllzylinder (111,112) in den richtigen äußeren Zylinder eingesteckt worden ist.

9. Nachfüllbarer Mehrkammerspender nach einem der Ansprüche 3-8, der außerdem einen Zugstreifen (142) aufweist, der unterhalb des unteren Endes der inneren Nachfüllzylinder (111,112) liegt, der mit den inneren Nachfüllzylindern (111,112) verbunden ist und eine Angriffsfläche bildet, wenn die Nachfüllkartusche (100) von dem Spendekopf (1) abgenommen wird.

10. Nachfüllbarer Mehrkammerspender nach einem der vorangehenden Ansprüche, der außerdem Flansche (155) am oberen Ende der inneren Nachfüllzylinder aufweist.

11. Nachfüllkartusche (100) zur Anwendung bei einem nachfüllbaren Mehrkammerspender für das gleichzeitige Auspressen von wenigstens zwei fließfähigen Stoffen, der aufweist:
zwei hohle, separate parallele innere Nachfüllzylinder (111,112), die dicht und teleskopartig von parallelen äußeren Spendezylindern eines wiederverwendbaren Spendekopfs (1) aufgenommen werden, jeder innere Nachfüllzylinder (111,112) enthält einen der fließfähigen Stoffe und hat jeweils ein oberes und ein unteres Ende (42), das teleskopartig und gleitend einen Kolbenkopf (4) aufnimmt, der formschlüssig mit den Innenwänden der inneren Nachfüllzylinder (111,112) ist und an diesen dicht entlang gleitet, um beim Drücken der inneren Nachfüllzylinder relativ zu den Kolbenköpfen (4) die fließfähigen Stoffe zum oberen Ende der inneren Nachfüllzylinder fließen zu lassen, wobei die Kolbenköpfe (4) unter Druck in Kolbenstangen (8) einer wiederverwendbaren Basiseinheit (2) eingreifen; und
Mittel (120), um zeitweilig das erste Ende der inneren Nachfüllzylinder (111,112) abzudichten;
dadurch gekennzeichnet, daß die Nachfüllkartusche weiterhin aufweist
Ausrichtmittel (140,141), die es ermöglichen, daß ein jeweiliger innerer Nachfüllzylinder (111,112,113,114) teleskopartig nur von einem der äußeren Spendezylinder eines Spendekopfs (1) und nicht vom anderen Spendezylinder aufgenommen wird; und
Zugstreifen (142,144), die unterhalb der unteren Enden (42) der inneren Nachfüllzylinder (111,112) liegen, die mit den inneren Nachfüllzylindern (111,112) verbunden sind und eine Fläche (142,144) bilden, die beim Abnehmen der Nachfüllkartusche (111,112,113,114) von dem Spendekopf (1) anfaßbar ist.

12. Nachfüllkartusche (100) nach Anspruch 11, bei der die Ausrichtmittel Streifen (140,141,144) aufweisen, die von den Außenwänden der inneren Nachfüllzylinder vorstehen und mit in den Innenwänden der äußeren Spendezylinder definierten Schlitzen (160,161,163) so zusammenwirken, daß jeder innere Nachfüllzylinder (111,112) teleskopartig nur von einem der äußeren Spendezylinder und nicht vom anderen Spendezylinder aufgenommen werden kann.

13. Nachfüllkartusche (100) nach Anspruch 11 oder 12, bei der die inneren Nachfüllzylinder (111,112) aneinander befestigt sind.

14. Nachfüllkartusche (100) nach Anspruch 12, bei der die Ausrichtmittel (140,141) ein Ausrichtglied (140,141) aufweisen, das zwischen den inneren Nachfüllzylindern (111,112) liegt, und das Ausrichtglied (140,141) liegt parallel, jedoch beabstandet zu einer gedachten Ebene, die von den Achsen der inneren Nachfüllzylinder (111,112) aufgespannt wird.

15. Nachfüllkartusche (100) nach einem der Ansprüche 11-14, die außerdem Zugstreifen (142,144) aufweist, die unter den zweiten Enden der inneren Nachfüllzylinder (111,112) liegen, mit denen sie verbunden sind und eine Fläche (142,144) bilden, die bei der Abnahme der Nachfüllkartusche vom Spendekopf anfaßbar ist.

16. Nachfüllkartusche (100) nach einem der Ansprüche 11-15, die außerdem Flansche (155) am oberen Ende der inneren Nachfüllzylinder aufweist.

## Revendications

1. Distributeur à cavités multiples, rechargeable, pour la co-extrusion d'au moins deux matériaux pouvant s'écouler, comportant :
une tête de distribution réutilisable (1) comportant au moins deux cylindres extérieurs de distribution parallèles, séparés et creux, les cylindres extérieurs de distribution ayant une première extrémité (41) de manière générale fermée et des canaux de sortie (12) situés au niveau de l'extrémité fermée ;
des moyens de sortie (17) en communication de fluide avec les canaux de sortie (12), les moyens de sortie (17) comportant des ouvertures de sortie adjacentes non-reliées les unes aux autres et ayant des moyens pour entraîner les matériaux pouvant s'écouler à s'écouler les uns vers les autres au niveau des ouvertures de sortie pour former un seul jet non-mélangé muni de bandes, constitué des matériaux, à l'extérieur des moyens de sortie ; et
une unité de base réutilisable (2) qui reçoit de manière coulissante et télescopique la tête de distribution (1), l'unité de base (2) ayant des tiges de piston (8), caractérisé en ce que le distributeur comporte de plus au moins une cartouche de recharge jetable (100) qui est adaptée pour être chargée dans la tête de distribution, chaque cartouche (100) comportant au moins un cylindre intérieur de recharge parallèle séparé et creux (111, 112, 113, 114), chaque cylindre intérieur étant reçu de manière télescopique et étanche dans un des cylindres extérieurs de distribution, chaque cylindre intérieur de recharge pour contenir un des matériaux pouvant s'écouler, chacun des cylindres intérieurs de recharge (111, 112, 113, 114) ayant une extrémité supérieure de manière générale ouverte en communication de fluide avec les canaux de sortie (12), et une extrémité inférieure (42) recevant de manière télescopique et coulissante une tête de piston (4) qui s'adapte pour passer de manière étanche le long des parois intérieures du cylindre intérieur de recharge (111, 112, 113, 114) de manière à forcer les matériaux pouvant s'écouler à s'écouler vers l'extrémité supérieure des cylindres intérieurs de recharge (111, 112, 113, 114) lors de la compression relative des cylindres intérieurs de recharge et des têtes de piston (4), les têtes de piston (4) pouvant venir en contact de manière compressible avec les tiges de piston (8) de l'unité de base réutilisable.

2. Distributeur à cavités multiples, rechargeable, selon la revendication 1, dans lequel la au moins une cartouche de recharge jetable comporte deux cartouches de recharge jetables, chaque cartouche comportant un cylindre intérieur de recharge creux (111, 112, 113, 114).

3. Distributeur à cavités multiples, rechargeable, selon la revendication 1, dans lequel la au moins une cartouche de recharge jetable comporte une cartouche de recharge jetable, la cartouche de recharge jetable comportant deux cylindres intérieurs de recharge creux (111, 112).

4. Distributeur à cavités multiples, rechargeable, selon l'une quelconque des revendications précédentes, comportant de plus des moyens d'orientation (140, 141) pour permettre à chaque cylindre intérieur de recharge (111, 112) d'être reçu de manière télescopique par un des cylindres extérieurs et non par l'autre.

5. Distributeur à cavités multiples, rechargeable, selon la revendication 4, dans lequel les moyens d'orientation (160, 161, 163) comportent des fentes (160, 161, 163) définies dans les parois intérieures des cylindres extérieurs de distribution et des pattes correspondantes (140, 141, 144) qui font saillie à partir des parois extérieures des cylindres intérieurs de recharge (111, 112, 113, 114), les pattes (140, 141, 144) et les fentes (160, 161) étant agencées de telle sorte que chaque cylindre intérieur de recharge (111, 112, 113, 114) peut être reçu de manière télescopique seulement par un des cylindres extérieurs de distribution et non par l'autre.

6. Distributeur à cavités multiples, rechargeable, selon l'une quelconque des revendications 3 à 5, dans lequel les cylindres intérieurs de recharge (111, 112) sont fixés l'un à l'autre.

7. Distributeur à cavités multiples, rechargeable, selon la revendication 6, comportant de plus des moyens d'orientation (160, 161) pour permettre à chaque cylindre de recharge (111, 112) d'être reçu de manière télescopique par seulement un des cylindres extérieurs et non par l'autre.

8. Distributeur à cavités multiples, rechargeable, selon l'une quelconque des revendications 3 à 7, dans lequel les moyens d'orientation (160, 161) comportent un élément d'orientation (160, 161) s'étendant entre les cylindres intérieurs de recharge (111, 112), l'élément d'orientation (160, 161) étant parallèle au plan imaginaire s'étendant entre les axes des cylindres intérieurs de recharge (111, 112), mais décalé par rapport à celui-ci, et dans lequel les cylindres extérieurs définissent des fentes (160, 161) qui sont alignées avec l'élément décalé (140, 141) et le reçoivent, lorsque chacun des cylindres intérieurs de recharge (111, 112) est inséré dans le cylindre extérieur approprié.

9. Distributeur à cavités multiples, rechargeable. selon l'une quelconque des revendications 3 à 8, comportant de plus des moyens formant patte de traction (142) s'étendant en dessous des extrémités inférieures des cylindres intérieurs de recharge (111, 112) et reliés aux cylindres intérieurs de recharge (111, 112) pour fournir une surface à saisir lorsque la cartouche de recharge (100) doit être enlevée de la tête de distribution (1).

10. Distributeur à cavités multiples, rechargeable, selon l'une quelconque des revendications précédentes, comportant de plus des rebords (155) sur l'extrémité supérieure des cylindres intérieurs de recharge.

11. Cartouche de recharge (100) destinée à être utilisée avec un distributeur à cavités multiples, rechargeable, pour la co-extrusion d'au moins deux matériaux pouvant s'écouler, comportant :
deux cylindres intérieurs de recharge parallèles, séparés et creux (111, 112), destinés à être reçus de manière télescopique et étanche dans des cylindres extérieurs de distribution, parallèles, d'une tête de distribution réutilisable (1), chaque cylindre intérieur de recharge (111, 112) comportant un des matériaux pouvant s'écouler, les cylindres intérieurs de recharge (111, 112) ayant chacun une extrémité supérieure ouverte et une extrémité inférieure (42) recevant de manière télescopique et coulissante une tête de piston (4) qui s'adapte pour passer de manière étanche le long des parois intérieures des cylindres intérieurs de recharge (111, 112) de manière à forcer les matériaux pouvant s'écouler à s'écouler vers l'extrémité supérieure des cylindres intérieurs de recharge (111, 112) lors de la compression relative des cylindres intérieurs de recharge (111, 112) et des têtes de piston (4), les têtes de piston (4) pouvant être en contact de manière compressible avec les tiges de piston (8) d'une unité de base réutilisable (2) ; et
des moyens (120) pour assurer temporairement l'étanchéité de première extrémité des cylindres intérieurs de recharge (111, 112) ; caractérisée en ce qu'elle comporte de plus
des moyens d'orientation (140, 141) pour permettre à chaque cylindre intérieur de recharge (111, 112, 113, 114) d'être reçu de manière télescopique par un des cylindres extérieurs de distribution d'une tête de distribution (1) et non par l'autre ; et
des moyens formant patte de traction (142, 144) s'étendant en dessous des extrémités inférieures (42) des cylindres intérieurs de recharge (111, 112) et reliés aux cylindres intérieurs de recharge (111, 112) pour fournir une surface (142, 144) à saisir lorsque la cartouche de recharge (111, 112, 113, 114) est enlevée de la tête de distribution (1).

12. Cartouche de recharge (100) selon la revendication 11, dans laquelle les moyens d'orientation comportent des pattes (140, 141, 144) qui font saillie à partir des parois extérieures des cylindres intérieurs de recharge pour coopérer avec des fentes (160, 161, 163) définies dans les parois intérieures des cylindres extérieurs de distribution de telle sorte que chaque cylindre intérieur de recharge (111, 112) peut être reçu de manière télescopique seulement par un des cylindres extérieurs de distribution et non par l'autre.

13. Cartouche de recharge (100) selon la revendication 11 ou 12, dans laquelle les cylindres intérieurs de recharge (111, 112) sont reliés l'un à l'autre.

14. Cartouche de recharge (100) selon la revendication 12, dans laquelle les moyens d'orientation (140, 141) comportent un élément d'orientation (140, 141) s'étendant entre les cylindres intérieurs de recharge (111, 112), l'élément d'orientation (140, 141) étant parallèle au plan imaginaire qui s'étend entre les axes des cylindres intérieurs de recharge (111, 112), mais décalé par rapport à celui-ci.

15. Cartouche de recharge (100) selon l'une quelconque des revendications 11 à 14, comportant de plus des moyens formant patte de traction (142, 144) s'étendant en dessous des secondes extrémités des cylindres intérieurs de recharge (111, 112) et reliés aux cylindres intérieurs de recharge (111, 112) pour fournir une surface (142, 144) à saisir lorsque la cartouche de recharge (100) est enlevée de la tête de distribution.

16. Cartouche de recharge selon l'une quelconque des revendications 11 à 15, comportant de plus des rebords (155) sur l'extrémité supérieure des cylindres intérieurs de recharge.
